# FASCICULE DE BREVET EUROPEEN

(11) **EP 2 272 571 B1**
(45) Date de publication et mention de la délivrance du brevet: **12.06.2013**
(21) Numéro de dépôt: 10168356.3
(22) Date de dépôt: 02.07.2010
(51) Int. Cl.: B62B 13/04, A63C 5/06, A63C 11/10, B62B 15/00, B62B 17/06, A63C 5/03

(54) **Engin de glisse sur neige guidé par un utilisateur et comportant un passager**
Von einem Benutzer angetriebener Rodelschlitten für den Schnee, worauf ein Mitfahrer transportiert werden kann
Snow skating vehicle propelled by a user and comprising a passenger

(30) Priorité: 06.07.2009 FR 0954644
(43) Date de publication de la demande: 12.01.2011
(73) Titulaire: Arnol, Eric, 38860 Les Deux Alpes (FR)
(72) Inventeur: Arnol, Eric, 38860 Les Deux Alpes (FR)
(74) Mandataire: Gasquet, Denis

(56) Documents cités:
- DE-A1- 3 606 831
- DE-U1- 20 020 978
- FR-A- 1 383 533
- NL-C2- 2 001 149
- SU-A1- 1 311 987
- US-A- 1 646 790
- US-A- 3 885 803
- US-A1- 2005 225 042

## Description

La présente invention se rapporte à un engin de glisse sur neige guidé par un utilisateur et comportant un passager. Elle concerne plus particulièrement un engin de glisse sur lequel peut monter un enfant et dont le contrôle et le guidage est effectué par un utilisateur qui n'est pas sur l'engin.

La pratique des sports de glisse s'apprend de plus en plus tôt et les enfants initiés aux sports de glisse sont de plus en plus jeunes. Ce phénomène s'est accentué par l'arrivé sur le marché de matériels plus légers, mais l'initiation au sport de glisse des très jeunes enfants reste difficile.

On connaît déjà des dispositifs constitués d'un harnais que l'on enfile sur l'enfant et prolongé par des sangles que l'adulte manipule pour guider l'enfant et le sécuriser, mais ces dispositifs sont d'un usage complexe et restent insuffisants pour l'initiation des touts petits.

Malgré tous les efforts développés par les constructeurs pour satisfaire une clientèle de plus en plus jeune, il n'existe pas, à ce jour, d'engin de glisse sur lequel un très jeune enfant peut se tenir debout, et satisfassent au besoin de sécurité, tout en apprenant les plaisirs de la glisse quel que soit le type de terrain et l'age de l'enfant.

On connaît par le document antérieur DE 36 06 831 un engin de glisse qui est une luge classique qui comprend deux patins latéraux sur laquelle le passager se tient assis. Ce document décrit un engin de glisse mais pas une planche de glisse. De plus le passager qui est vraisemblablement un enfant n'a pas vraiment d'organe sur pour se tenir surtout lors des accélérations et des décélérations.

Le document NL 2001149C décrit un engin de glisse selon le préamblule de la revendication 1.

La présente invention se veut de proposer un engin de glisse particulièrement attractif et pratique permettant à un utilisateur d'initier par exemple un jeune enfant, au plaisir de la glisse sur neige et ce en toute sécurité.

Ainsi l'invention est relative à un engin de glisse sur neige selon la revendication 1.

Selon un mode d'exécution préféré, l'organe arrière est constitué par un étrier en forme de U, constitué par deux tiges s'étendant vers le haut et vers l'arrière reliées par leur extrémité supérieure par la barre horizontale, et dont les extrémités libres inférieures sont fixées à la planche de glisse.

Notons que de façon préférée, l'extrémité supérieure de l'ensemble constituant l'organe arrière de guidage s'étend au-delà de l'extrémité arrière de la planche de glisse, tandis que l'ensemble constituant l'organe arrière de guidage est recourbé vers l'arrière.

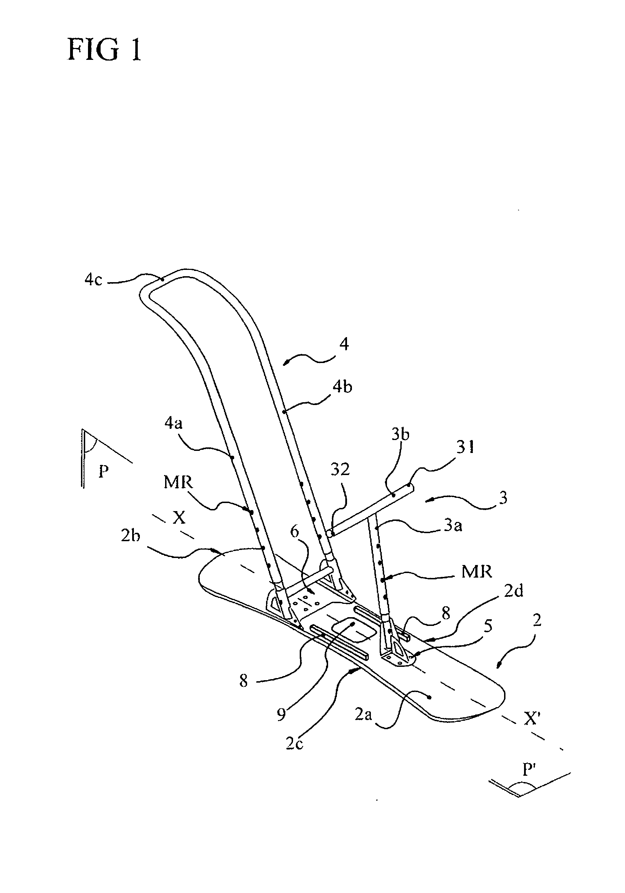

La figure 1 est une vue en perspective avant de l'engin de glisse de l'invention.
La figure 2 est une vue en perspective de l'engin de glisse de l'invention en cours d'utilisation.

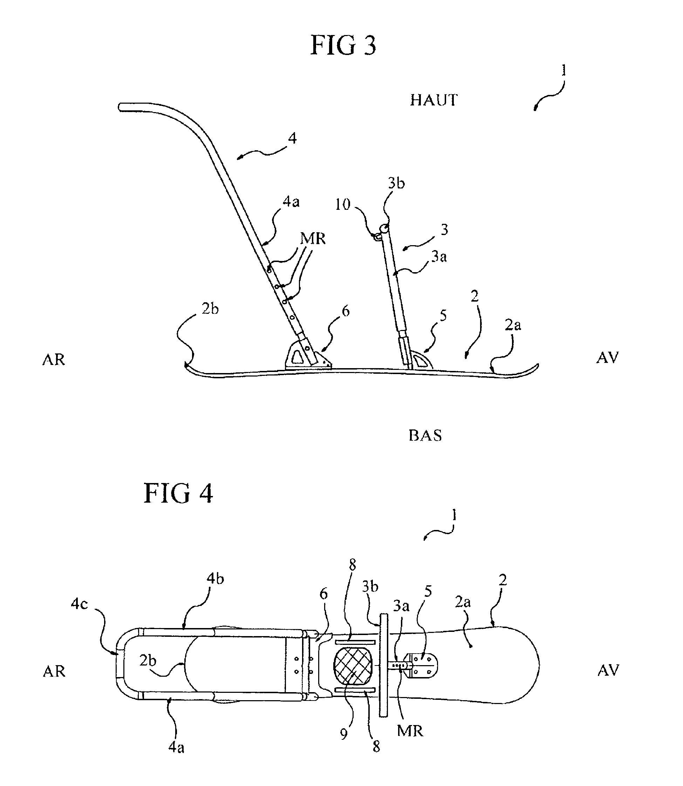

La figure 3 est une vue latérale.
La figure 4 est une vue de dessus.

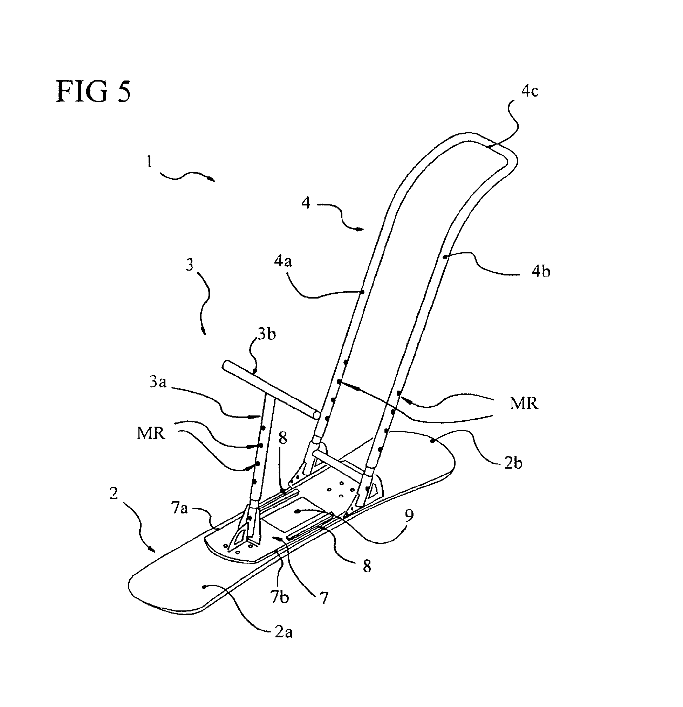

La figure 5 est une vue en une vue en perspective d'une variante de réalisation de l'engin de glisse.
Les figures 6 et 7 illustrent des variantes d'exécution ;

Le dispositif de l'invention portant la référence générale (1) est un engin de glisse sur neige destiné à être guidé par un utilisateur (100), et porter un passager (200), est constitué par une planche de glisse (2), de plan vertical de symétrie générale (P) et d'axe longitudinal (X-X').

La planche de glisse (2) a la forme d'une poutre allongée, ayant sa propre distribution d'épaisseur, de ligne de côte, de largeur et de raideur, et peut être de tout type de structure, et qui est constituée par une zone centrale dite de patin prolongée vers l'avant par une partie avant relevée à son extrémité pour constituer une spatule, et vers l'arrière par une partie arrière terminée par un talon, ledit engin comporte au moins deux organes (3, 4) s'étendant vers le haut, à savoir un organe avant (3) et un organe arrière (4).

L'organe avant (3) constitue les moyens de maintient du passager (200) qui se tient debout, assis ou partiellement assis, sur la planche de glisse (2) entre l'organe avant (3) et l'organe arrière (4).

L'organe arrière (4) est un organe de préhension et de guidage, permettant à un utilisateur (100) de conduire et de retenir l'engin de glisse (1).

On notera que le passager (200) qui se tient debout, assis, ou partiellement assis se retient par l'organe avant (3) et maintient ainsi son équilibre. Ledit passager (200) se situe avantageusement, mais non limitativement, sensiblement au niveau du centre de la planche de glisse (2).

Selon l'invention, l'organe avant (3), est avantageusement constitué par un mat (3a) dont l'extrémité supérieure porte une barre transversale (3b). Ledit organe avant (3) a donc la forme d'un T fixé par son extrémité inférieure à la surface supérieur (2a) de la planche de glisse (2). Les deux branches latérales réalisées par les extrémités (31, 32) de la barre transversale (3b) constituent les moyens de maintient du passager (200), lui permettant de ne pas perdre l'équilibre.

L'organe avant (3) de l'invention peut comporter des moyens de réglage (MR) de la hauteur. Ces moyens de réglage (MR) de la hauteur sont par exemple disposés sur le mat (3a) et sont réalisés par deux parties coulissantes l'une dans l'autre et comporte des moyens de verrouillage dans la position choisie.

Ainsi le mat (3a) est constitué par deux tubes coulissant l'un dans l'autre, mais peut être réalisé par toute forme de profil sans pour autant sortir du champ de l'invention. La barre transversale (3b) est avantageusement réalisée par un profil en tube, mais peut être réalisé par toute forme de profil sans sortir du champ de l'invention.

Selon une variante d'exécution, l'organe avant (3) comporte des moyens de fixation amovible, permettant le démontage et le montage de la barre transversale sur le mat. Ces moyens sont par exemple constitués par un profile en creux situé sur l'extrémité supérieur du mat (3a) correspondant au profile externe de la barre transversale (3b). Ainsi, selon le mode de l'invention, le mat (3a) sont surmonté sur son extrémité supérieure d'un tube, dans lequel la barre transversale (3b) est introduite.

Ledit organe avant (3) est avantageusement fixé à la planche de glisse (2) par l'intermédiaire d'une embase avant (5) fixée sur la surface supérieure (2a) de la planche de glisse (2) et sur laquelle est fixée l'extrémité inférieure de l'organe avant (3), et plus particulièrement de son mât (3a).

L'organe avant (3) est fixé de façon à ce que son mât (3a) s'étende vers le haut sensiblement verticalement par rapport au plan (P') correspondant à la surface supérieure (2a) de la planche de glisse, mais peut aussi, selon d'autre mode de réalisation, être incliné vers l'avant (AV) ou, vers l'arrière (AR).

Ainsi, l'embase (5) portant l'organe avant (3) comporte des moyens de réglage de l'inclinaison et des moyens de fixation amovible dudit organe sur l'embase. Lesdits moyens de fixation amovibles permettant le démontage dudit organe facilitent ainsi le transport du dispositif.

Lesdits moyens d'inclinaison avantageusement réalisés entre les organes et la/les embases permettent aussi de rabattre lesdits organes contre la surface supérieure (2a) de la planche de glisse, réduisant ainsi son encombrement et facilitant son transport.

L'embase (5) comporte aussi des moyens de réglage en position permettant le positionnent de l'organe (3) vers l'arrière ou vers l'avant par rapport à l'embase (5) et/ou par rapport à la surface supérieur (2a) de la planche de glisse (2).

Selon une variante de réalisation de l'invention, non représenté, l'organe avant pourrait avoir la forme d'un U renversé réalisé par deux mats parallèles dont leur extrémité supérieure seraient reliées par une barre transversale.

Comme nous l'avons déjà précisé, l'engin de glisse (1) de l'invention portant un passager (200) est guidé par un utilisateur (100) qui lui-même n'est pas porté par l'engin (1). L'utilisateur (100) est avantageusement équipé de ski permettant d'utiliser le dispositif dans une pente, mais peut aussi être équipé, par exemple, de raquette à neige, ou tout autre équipement, voir être à pied, sans sortir du champ de l'invention.

Ainsi, l'engin de glisse (1) de l'invention comporte à cet effet un organe arrière (4) de guidage.

Cet organe de guidage est par exemple constitué par un étrier ayant la forme d'un U renversé constitué par deux tiges (4a, 4b) s'étendant vers le haut, dont leurs extrémités supérieures sont reliées par une barre horizontale (4c)

Notons que l'étrier formant l'organe arrière de préhension (4) est fixé à la planche (1) de façon amovible

L'ensemble constituant l'organe arrière (4) de guidage est avantageusement recourbé vers l'arrière (AR) de façon à ce que son extrémité supérieure dépasse de l'extrémité arrière (2b) de la planche de glisse (2). Cette caractéristique permet à l'utilisateur qui n'est pas sur la planche (1) de guider l'engin (1), sans être gêné.

Bien entendu l'organe arrière de guidage peut s'étendre vers le haut sans courbure mais serait alors un suffisamment incliné vers l'arrière, de façon à ce que son extrémité arrière dépasse de l'extrémité arrière de la planche de glisse.

Selon encore un autre mode de réalisation, l'organe arrière de guidage pourrait être constitué par une seule tige dont l'extrémité supérieure porterait une barre transversale. Ledit organe aurait donc la forme d'un T fixé de façon amovible par son extrémité inférieure à la surface supérieure de la planche de glisse.

L'organe arrière (4) comporte avantageusement des moyens de réglage (MR) de la hauteur, permettant à l'utilisateur guidant l'engin de glisse, de régler l'organe arrière (4) de guidage en fonction de sa morphologie. Ces moyens de réglages (MR) sont réalisés par exemple par deux profils coulissants l'un dans l'autre et des moyens de blocage en positions.

Les moyens de réglage et de blocage en position de la hauteur de l'organe arrière de guidage (4) et de l'organe avant (3) sont avantageusement réalisés par une succession de trous correspondant sur les tubes coulissants dans lesquelles des goupilles, des vis ou autres sont introduites.

Selon une autre caractéristique de l'invention, et quel que soit le mode de réalisation de l'organe arrière (4), l'engin de glisse comporte une embase arrière (6) fixé sur la surface supérieure (2a) de la planche de glisse (2) et sur laquelle est fixée l'extrémité inférieure de l'organe arrière de guidage (4). Aussi quel que soit le mode de réalisation de l'organe avant (3), l'engin de glisse (1) comporte une embase avant (5) fixée sur la surface supérieure (2a) de la planche de glisse (2) et sur laquelle est fixée l'extrémité inférieure de l'organe avant (3).

L'embase (5) portant l'organe avant (3) et l'embase (6) portant l'organe arrière (4) comporte avantageusement des moyens de réglage de l'inclinaison et des moyens de fixation amovibles desdits organes. Lesdits moyens de fixation amovibles permettant par ailleurs le démontage desdits organes facilitant ainsi le transport du dispositif.

L'embase avant (5) peut comporter aussi des moyens de réglage en position longitudinale permettant le positionnent de l'organe vers l'arrière ou vers l'avant par rapport à l'embase et/ou par rapport à la surface supérieur de la planche de glisse.

L'embase arrière (6) peut aussi comporter des moyens de réglage en position longitudinale, permettant le positionnent de l'organe correspondant vers l'arrière ou vers l'avant par rapport à l'embase et/ou par rapport à la surface supérieur de la planche de glisse.

Selon un autre mode de réalisation, la planche de glisse comporte une embase (7) portant les deux organes (3, 4). Cette embase (7) comporte tous les moyens de réglage et de fixations décrits précédemment. Ainsi, selon ce mode de réalisation, le passager (200) se tient entre les deux organes (3,4) sur l'embase (7). L'embase comporte une partie anti-glisse (9), réalisé par exemple par un pad, des stries, ou tout autre moyen, situé sous les pieds du passager (200), ou sur toute la surface de ladite embase (7).

Des cales latérales (8) sont aménagées sur l'embase (7) et positionnées sur les extrémités latérales (7a, 7b) de ladites embase (7) maintenant latéralement les pieds du passager et les cales (8) sont avantageusement positionnées parallèlement à l'axe longitudinal (X-X') de la planche de glisse (2). D'autres cales (non représentées) sont positionnées sur les ladites embase (7) maintenant longitudinalement les pieds du passager, et sont avantageusement positionnées perpendiculairement à l'axe longitudinal (X-X') de la planche de glisse (2).

Selon une autre variante non représentée, la planche pourrait comprendre une saillie longitudinale permettant la séparation des deux pieds du passager. Par ailleurs, on pourrait aussi prévoir une retenue des deux pieds réalisée par exemple par une sangle de coup de pied ou tout autre dispositif de retenue.

Selon le mode de réalisation, selon lequel l'engin de glisse (2) comporte plusieurs embases (5, 6), la partie anti-glisse (9) et les cales (8) sont situées directement sur la surface supérieure (2a) de la planche de glisse (2). Ces cales sont situées sur la surface supérieure, le long des bords latéraux (2c, 2d) de la planche de glisse, parallèlement à l'axe longitudinale X-X',

L'engin de glisse peut comporter avantageusement, une selle amovible ou similaire réalisée par une sangle réglable en longueur et d'un plateau souple. Elle est fixée sur sa partie avant, sur l'organe avant et sur sa partie arrière, sur l'organe arrière. Les organes avant et arrières comportent des moyens d'accrochage amovible, d'une sangle qui passe, soit sur les coté, soit entre les jambes dudit passager. Ces moyens d'accrochage, sont réalisés avantageusement par des anneaux (10) fixés sur l'organe avant et/ou l'organe arrière, sur lesquels une sangle peut être attachée de façon amovible.

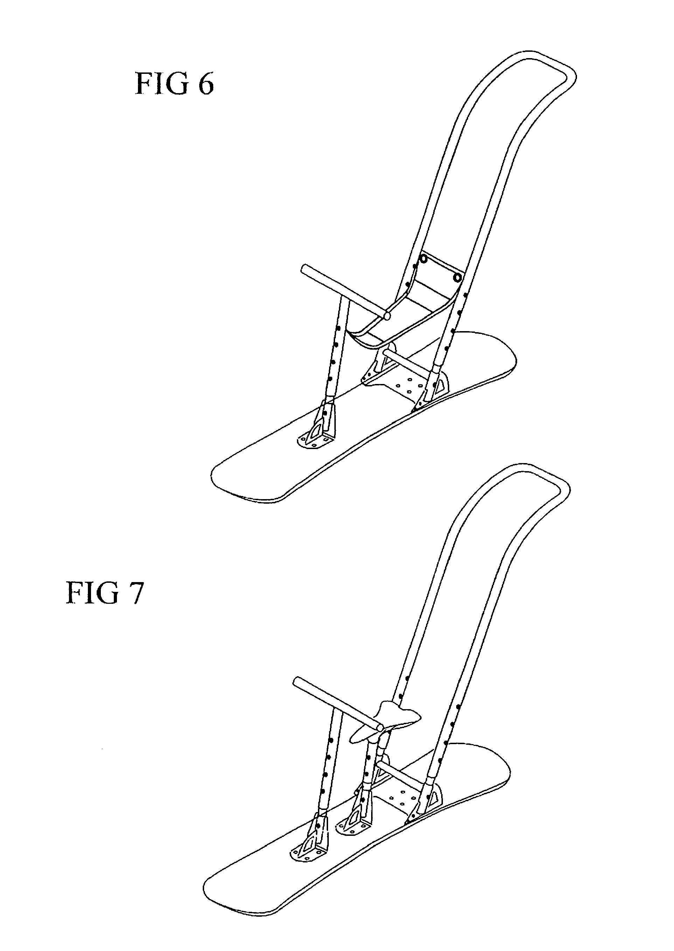

Les figures 6 et 7 illustrent deux variantes d'exécution. Ainsi, selon la variante illustrée à la figure 6 l'engin comprend une assise centrale pour l'utilisateur. Ladite assise reliant l'organe avant avec l'organe arrière. Selon la variante illustrée à la figure 7, il est prévu sur la planche une selle centrale montée sur une tige

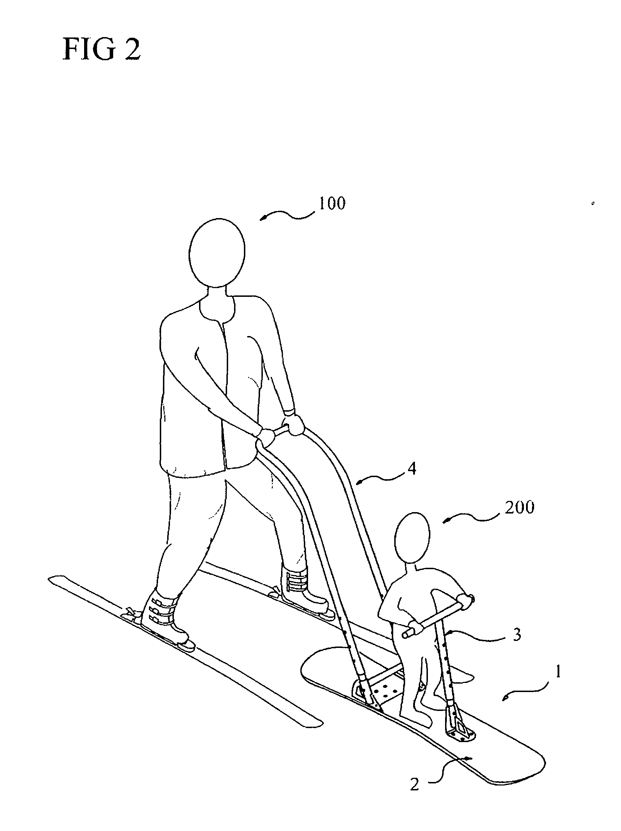

L'engin de glisse de l'invention s'utilise tel que cela est illustré à la figure 2. Ainsi, le passager (200) prend place sur la planche de glisse (1) en se plaçant entre l'organe avant (3) et l'organe arrière (4). Ledit passager qui est un enfant se maintien sur la planche par l'organe avant (3) et plus précisément par le maintien de la branche transversale (3b). L'utilisateur qui (100) qui est équipé de skis, se place à l'arrière, derrière l'organe arrière (4) et dirige l'engin (1) grâce à l'organe arrière (4) qu'il maintien par la branche transversale (4c). On notera que les deux skis de l'utilisateur sont placés naturellement de part et d'autre de la planche (2). Ainsi l'utilisateur pourra tout à loisir descendre les pentes enneigées en dirigeant l'engin, et ce en toute sécurité.

On ajoutera que les mâts et les tiges des organes avant et/ou arrière, pourraient être amovibles, escamotables voir télescopiques, pour faciliter le transport de l'engin, et permettre un meilleur stockage.

## Revendications

1. Engin de glisse sur neige (1) destiné à être guidé par un utilisateur (100), et porter un passager (200), ledit engin comportant une planche de glisse (2), ayant la forme d'une poutre allongée et ayant sa propre distribution d'épaisseur, de ligne de côte, de largeur et de raideur, de plan vertical de symétrie générale (P) et d'axe longitudinal (X-X'), constituée par une zone centrale dite de patin prolongée au moins vers l'avant par une partie avant relevée à son extrémité pour constituer une spatule, **caractérisé en ce que** ledit engin comporte au moins deux organes (3, 4) s'étendant vers le haut, à savoir un organe avant (3) de maintien du passager (200) et un organe arrière (4) de guidage pour l'utilisateur (100), et **en ce que** l'organe avant (3) est constitué par au moins un mât (3a) dont l'extrémité supérieure comporte une barre transversale (3b) permettant à un passager (200) de se tenir et dont l'extrémité inférieure est fixée à la planche de glisse (2), tandis que l'organe arrière (4) de guidage est constitué par au moins une tige (4a, 4b) s'étendant vers l'arrière et vers le haut comprenant à son extrémité une barre horizontale (4c).

2. Engin de glisse sur neige (1) selon la revendication 1, **caractérisé en ce qu'**il comprend des moyens de réglage en hauteur (MR) de la longueur dudit mât (3a) de l'organe avant (3).

3. Engin de glisse sur neige (1) selon la revendication précédente, **caractérisé en ce que** l'organe arrière est constitué par un étrier en forme de U, constitué par deux tiges (4a, 4b) s'étendant vers le haut et vers l'arrière reliées par leur extrémité supérieure par la barre horizontale (4c), et dont les extrémités libres inférieures sont fixées à la planche de glisse (2).

4. Engin de glisse sur neige (1) selon la revendication 3, **caractérisé en ce qu'**il comprend des moyens de réglage de la longueur des tiges (4a, 4b) constituant l'organe arrière (4).

5. Engin de glisse sur neige (1) selon l'une quelconque des revendications précédentes, **caractérisé en ce que** l'extrémité supérieure de l'ensemble (4a, 4b, 4c) constituant l'organe arrière (4) de guidage s'étend au-delà de l'extrémité arrière (2b) de la planche de glisse (2).

6. Engin de glisse sur neige (1) selon l'une quelconque des revendications 4 ou 5, **caractérisé en ce que** l'ensemble (4a,4b,4c) constituant l'organe arrière (4) de guidage est recourbé vers l'arrière.

7. Engin de glisse sur neige (1) selon l'une quelconque des revendications précédentes, **caractérisé en ce qu'**il comporte au moins une embase (5, 6) fixée à la planche de glisse (2) sur la/lesquelles le/les organes (3,4) sont fixés de manière amovible.

8. Engin de glisse sur neige (1) selon la revendication précédente **caractérisé en ce que** la ou les embases (5, 6) fixées à la planche de glisse (2) comportent des moyens de réglages en position longitudinale permettant le positionnement des ou d'un des organes (3,4) vers l'arrière (AR) ou vers l'avant (AV).

9. Engin de glisse sur neige (1) selon l'une quelconque des revendications 7 ou 8, **caractérisé en ce que** la ou les embases (5,6) fixées à la planche de glisse (2) comportent des moyens de réglages de l'inclinaison des ou d'un des organes (3,4) permettant d'affiner le réglage et de rabattre lesdits organes contre la surface supérieure de la planche de glisse.

10. Engin de glisse sur neige (1) selon l'une quelconque des revendications précédentes, **caractérisé en ce que** les ou un des organes organes (3,4) comporte des moyens d'accrochage d'une sangle formant une selle amovible pour le passager (200).

## Patentansprüche

1. Rodelschlitten (1), der dazu bestimmt ist, von einem Benutzer (100) gelenkt zu werden und einen Mitfahrer (200) zu tragen, wobei der Schlitten ein Gleitbrett (2) aufweist, das die Form eines länglichen Balkens hat und seine eigene Verteilung der Stärke, der Seitenlinie, Breite und Steifheit, mit allgemeiner vertikaler Symmetrieebene (P) und Längsachse (X-X') hat, das aus einer so genannten zentralen Kufenzone besteht, die wenigstens zur Vorderseite durch einen an seinem Ende angehobenen Vorderteil verlängert wird, um eine Schaufel zu bilden, **dadurch gekennzeichnet, dass** der Schlitten mindestens zwei Organe (3, 4) aufweist, die sich nach oben erstrecken, nämlich ein vorderes Organ (3) zum Halten des Mitfahrers (200) und ein hinteres Organ (4) zum Lenken für den Benutzer (100), und dass das vordere Organ (3) aus mindestens einem Mast (3a) besteht, dessen oberes Ende eine Querstange (3b) aufweist, die es einem Mitfahrer (200) erlaubt, sich festzuhalten, und dessen unteres Ende an dem Gleitbrett (2) befestigt ist, während das hintere Organ (4) zum Führen aus mindestens einem Schaft (4a, 4b) besteht, der sich rückwärts und zu der Oberseite erstreckt, der an seinem Ende eine horizontale Stange (4c) aufweist. '

2. Rodelschlitten (1) nach Anspruch 1, **dadurch gekennzeichnet, dass** er Mittel zur Höheneinstellung (MR) der Länge des Masts (3a) des vorderen Organs (3) aufweist.

3. Rodelschlitten (1) nach dem vorhergehenden Anspruch, **dadurch gekennzeichnet, dass** das hintere Organ aus einem U-förmigen Bügel besteht, der aus zwei Schäften (4a, 4b) besteht, die sich nach oben und rückwärts erstrecken, die durch ihr oberes Ende durch die horizontale Stange (4c) verbunden sind und deren freie untere Enden an dem Gleitbrett (2) befestigt sind.

4. Rodelschlitten (1) nach Anspruch 3, **dadurch gekennzeichnet, dass** er Mittel zum Einstellen der Länge der Schäfte (4a, 4b), die das hintere Organ (4) bilden, aufweist.

5. Rodelschlitten (1) nach einem der vorhergehenden Ansprüche, **dadurch gekennzeichnet, dass** sich das obere Ende der Einheit (4a, 4b, 4c), die das hintere Organ (4) zum Führen bildet, über das hintere Ende (2b) des Gleitbretts (2) hinaus erstreckt.

6. Rodelschlitten (1) nach einem der Ansprüche 4 oder 5, **dadurch gekennzeichnet, dass** die Einheit (4a, 4b, 4c), die das hintere Organ (4) zum Führen bildet, nach hinten zurückgebogen ist.

7. Rodelschlitten (1) nach einem der vorhergehenden Ansprüche, **dadurch gekennzeichnet, dass** er mindestens einen Sockel (5, 6), der an dem Gleitbrett (2) befestigt ist, aufweist, auf dem/welchen das/die Organe (3, 4) abnehmbar befestigt sind.

8. Rodelschlitten (1) nach dem vorhergehenden Anspruch, **dadurch gekennzeichnet, dass** der oder die Sockel (5, 6), die an dem Gleitbrett (2) befestigt sind, Mittel zum Einstellen in Längsposition aufweisen, die das Positionieren des oder der Organe (3, 4) nach hinten (AR) oder nach vorn (AV) erlauben.

9. Rodelschlitten (1) nach einem der Ansprüche 7 oder 8, **dadurch gekennzeichnet, dass** der oder die Sockel (5, 6), die an dem Gleitbrett (2) befestigt sind, Mittel zum Einstellen der Neigung des oder der Organe (3, 4) aufweisen, die es erlauben, die Einstellung zu verfeinern und die Organe gegen die obere Oberfläche des Gleitbretts herunterzuklappen.

10. Rodelschlitten (1) nach einem der vorhergehenden Ansprüche, **dadurch gekennzeichnet, dass** das oder die Organe (3, 4) Mittel zum Anhängen eines Gurts, der einen abnehmbaren Sattel für den Mitfahrer (200) bildet, aufweisen.

## Claims

1. Device (1) for sliding on snow which is designed to be guided by a user (100), and to bear a passenger (200), the said device comprising a sliding board (2) which is in the form of an elongate beam, and has its own distribution of thickness, sidecut, width and rigidity, vertical plane of general symmetry (P) and longitudinal axis (X-X') constituted by a central area known as a runner prolonged at least towards the front by a front part which is raised at its end in order to constitute a spatula, **characterised in that** the said device comprises at least two units (3, 4) which extend upwards, i.e. a front unit (3) for retention of the passenger (200) and a rear unit (4) for guiding for the user (100), and **in that** the front unit (3) is constituted by at least one pole (3a), the upper end of which comprises a transverse bar (3b) which allows a passenger (200) to hold on, and the lower end of which is secured to the sliding board (2), whereas the rear guiding unit (4) is constituted by at least one rod (4a, 4b) which extends rearwards and upwards, comprising a horizontal bar (4c) at its end.

2. Device (1) for sliding on snow according to claim 1, **characterised in that** it comprises means (MR) for setting the height of the length of the said pole (3a) of the front unit (3).

3. Device (1) for sliding on snow according to the preceding claim, **characterised in that** the rear unit is constituted by a stirrup in the form of a "U", constituted by two rods (4a, 4b) which extend upwards and rearwards and are connected at their upper end by the horizontal bar (4c), and the lower free ends of which are secured to the sliding board (2).

4. Device (1) for sliding on snow according to claim 3, **characterised in that** it comprises means for setting the length of the rods (4a, 4b) which constitute the rear unit (4).

5. Device (1) for sliding on snow according to any one of the preceding claims, **characterised in that** the upper end of the assembly (4a, 4b, 4c) which constitutes the rear guiding unit (4) extends beyond the rear end (2b) of the sliding board (2).

6. Device (1) for sliding on snow according to either one of claims 4 or 5, **characterised in that** the assembly (4a, 4b, 4c) which constitutes the rear guiding unit (4) is curved rearwards.

7. Device (1) for sliding on snow according to any one of the preceding claims, **characterised in that** it comprises at least one base (5, 6) which is secured to the sliding board (2) on which the unit(s) (3,4) is/are secured in a detachable manner.

8. Device (1) for sliding on snow according to the preceding claim, **characterised in that** the base(s) (5, 6) secured to the sliding board (2) comprise(s) means for setting the longitudinal position which permit the positioning of the units or one of the units (3, 4) towards the rear (AR) or towards the front (AV).

9. Device (1) for sliding on snow according to either one of claims 7 or 8, **characterised in that** the base(s) (5, 6) secured to the sliding board (2) comprise(s) means for setting the inclination of the units or one of the units (3, 4), thus making it possible to improve the setting and to fold the said units back against the upper surface of the sliding board.

10. Device (1) for sliding on snow according to any one of the preceding claims, **characterised in that** the units or one of the units (3, 4) comprise(s)means for coupling of a strap which forms a detachable saddle for the passenger (200).
